# FASCICULE DE BREVET EUROPEEN

(11) **EP 0 669 183 B1**
(45) Date de publication et mention de la délivrance du brevet: **16.04.1997**
(21) Numéro de dépôt: 95400354.7
(22) Date de dépôt: 21.02.1995
(51) Int. Cl.: B23K 20/12

(54) **Procédé de soudage de deux parties d'aube**
Schweissverfahren für zwei Teile einer Schaufel
Welding method of two parts of a blade

(30) Priorité: 23.02.1994 FR 9402026
(43) Date de publication de la demande: 30.08.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Collot, André Claude Félix, F-91540 Mennecy (FR); Ferte, Jean-Pierre, F-91100 Corbeil Essonnes (FR); Jolly, Roger, F-77240 Cesson (FR)

(56) Documents cités:
- EP-A- 0 145 897
- EP-A- 0 486 755
- GB-A- 2 237 758
- PATENT ABSTRACTS OF JAPAN vol. 7 no. 283 (M-263) ,16 Décembre 1983 & JP-A-58 159988 (HITACHI SEISAKUSHO KK) 22 Septembre 1983,
- PATENT ABSTRACTS OF JAPAN vol. 6 no. 242 (M-175) ,30 Novembre 1982 & JP-A-57 139485 (HITACHI DENSEN KK) 28 Août 1982,

## Description

L'invention se rapporte à un procédé de soudage de deux parties d'aube et peut en particulier être appliquée à la construction de ce qu'on appelle des disques aubagés monoblocs (DAM) dont on produit par moulage ou forgeage et usinage le disque proprement dit et les parties des aubes appelées manchettes qui s'y raccordent, et, séparément, le complément des aubes. On entreprend ensuite de souder ces compléments d'aube aux manchettes, par un procédé qui peut être un soudage linéaire par friction, pour obtenir le produit fini. Mais la qualité du soudage est généralement insuffisante aux deux fils des aubes, qu'on appelle bord d'attaque et bord de fuite, car d'une part l'échauffement de ces derniers est très sensiblement moindre que celui de la partie centrale de l'aube, du fait que les parties en vis-à-vis y sont alternativement mises à l'air, et d'autre part l'expulsion latérale de matière y est très faible du fait de la température moindre et de l'épaisseur locale réduite ; enfin, cette mise à l'air entraîne un risque de contamination du métal à ces endroits par oxydation.

On remédie traditionnellement à cet inconvénient en construisant la manchette et la partie complémentaire de l'aube avec une surépaisseur, et on amène l'ensemble aux cotes du produit fini après le soudage, ce qui présente quelques inconvénients : l'usinage de ces surfaces gauches est une opération délicate.

Si cette méthode est acceptée pour des pièces neuves, les critères d'acceptation en réparation peuvent interdire de recharger en métal la manchette, qui est aux cotes du produit fini.

L'invention permet de fournir une soudure correcte ou bonne des aubes, y compris aux bords d'attaque et de fuite, en utilisant deux parties d'aube généralement à leur forme définitive, c'est-à-dire sans surépaisseur, sauf au voisinage immédiat de la zone de soudure. Sous sa forme la plus générale, elle concerne un procédé de soudage de deux parties d'aube, dans lequel les parties d'aube sont enserrées entre des paires de mâchoires et mises en contact entre elles sur leurs surfaces à souder par un mouvement de rapprochement des paires de mâchoires, ces mâchoires permettant aux parties à souder de ne pas se déformer sous la pression de soudage, et ce procédé est caractérisé en ce qu'une collerette est disposée aux surfaces de contact des parties d'aube, au moins aux bords d'attaque et de fuite desdites surfaces. La collerette s'étend autour des surfaces de contact : soit elle est intercalée entre elles, soit elle affleure à ces surfaces et elle s'étend alors uniquement autour des parties d'aubes.

La collerette ne fait pas partie intégrante de l'aube mais lui est rapportée, ce qui distingue complètement l'invention de la solution déjà connue. Le seul usinage qui soit nécessaire après le soudage est un ébavurage-ajustage pour détacher la collerette. Dans une réalisation, la collerette est une plaquette logée entre les surfaces de contact et qui est détruite pendant le soudage, à cause de l'élévation de température apportée pour le soudage et de l'effort exercé entre les surfaces de contact. Il est possible que la plaquette fournisse un peu de matériau d'apport à la soudure, mais cet effet n'est pas spécialement recherché et reste de toute façon secondaire par rapport à la nécessité d'obtenir une bonne soudure. Dans une autre série de conceptions, la collerette est divisée en deux parties respectivement disposées autour des surfaces de contact, affleurant au niveau desdites surfaces, et retenues par leurs bords par des rebords respectifs des paires de mâchoire. La matière de la collerette ne participe alors pas du tout à la soudure de l'aube, mais son rôle thermique demeure.

On peut recourir au soudage linéaire par friction, au soudage par étincelage ou au soudage par forgeage et fusion en particulier, car l'invention est mise en oeuvre de la même façon.

L'invention va maintenant être décrite plus en détail à l'aide des figures suivantes annexées à titre illustratif et non limitatif dont l'énumération suit :
- la figure 1 illustre un premier mode de mise en oeuvre de l'invention,
- les figures 2, 3, 4, 5 et 5A illustrent un deuxième mode de mise en oeuvre de l'invention,
- les figures 6 et 7 illustrent un troisième mode de mise en oeuvre de l'invention, et
- les figures 8, 9 et 10 illustrent trois genres de collerettes.

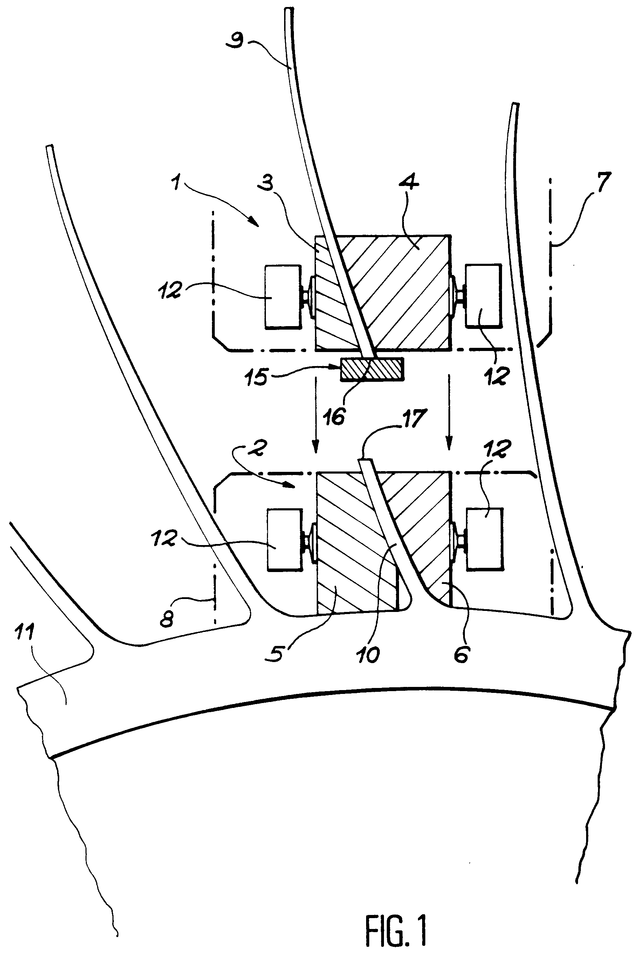

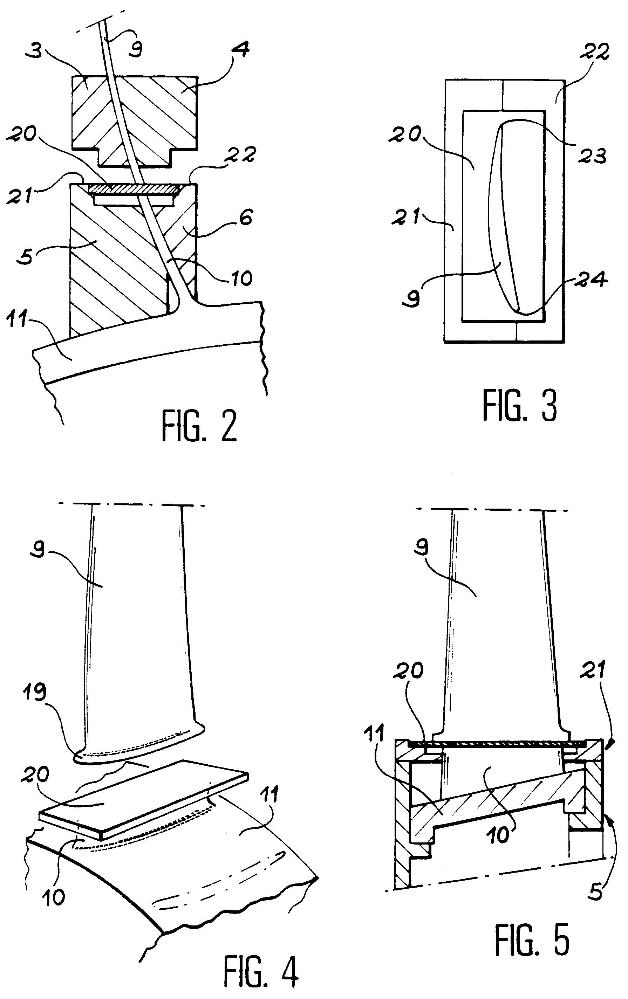

L'invention sera décrite plus précisément en liaison à un soudage par friction linéaire mais peut s'appliquer sans modification importante à d'autres genres de soudages. Une machine de soudage linéaire par friction comprend, comme on le voit à la figure 1, deux paires de mâchoires 1 et 2, dont les mâchoires, respectivement 3, 4 et 5, 6 sont façonnées avec des surfaces d'appui à la forme des pièces qu'elles enserrent et unies à des supports 7 et 8 esquissés par des vérins 12 ou des dispositifs similaires pour les rapprocher. Les supports 7 et 8 peuvent être déplacés d'un mouvement alternatif l'un par rapport à l'autre et rapprochés l'un de l'autre pour produire avec une pression suffisante le mouvement de frottement responsable de l'échauffement et finalement de la soudure. La paire de mâchoires 1 enserre l'extrémité 9 de l'aube à souder, et l'autre paire de mâchoires 2 enserre la manchette 10 ; le moyeu du disque 11 est lié au support 8 par des moyens non représentés. Dans la réalisation de la figure 1, une plaquette plane 15 en forme de collerette est soudée à la surface de contact 16 de l'extrémité d'aube 9. La surface de contact 17 de la manchette 10 est libre. La collerette 15 déborde de la section d'aube dans le sens de l'épaisseur, comme on le voit sur la figure, et déborde aussi dans le sens de la largeur, de façon à apporter la matière nécessaire à l'échauffement du bord d'attaque et du bord de fuite et à limiter le découvrement des surfaces à souder. La plaquette 15 est échauffée et déformée pendant le soudage et le forgeage qui suit celui-ci, et sa matière est rejetée des deux côtés de l'espace entre les paires de mâchoires 1 et 2. Finalement, l'extrémité 9 et la manchette 10 de l'aube s'unissent par leurs surfaces de contact 16 et 17, sans que la matière de la plaquette soit incorporée significativement à l'aube finie. Elle forme une bavure qui entoure les surfaces de contact 16 et 17 et qu'on retire ensuite sans procéder à un autre usinage de l'aube, car l'extrémité 9 et la manchette 10 sont, dans cette réalisation comme dans les autres, à leur forme définitive sauf éventuellement sur une petite hauteur près des surfaces de contact 16 et 17 (représentée sous la référence 19 à la figure 4).

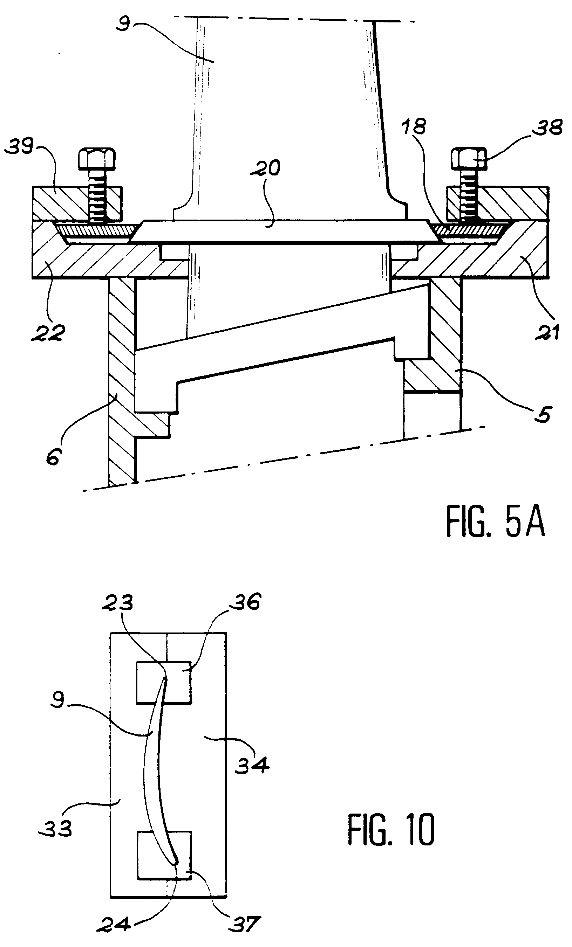

Les figures 2 à 5, dont la figure 2 représente une coupe transversale de l'appareillage, la figure 3 une vue de dessus, la figure 4 une vue en perspective et la figure 5 une coupe longitudinale, montrent une conception où la plaquette 15 solidaire de l'extrémité 9 est remplacée par une plaquette 20 posée entre les surfaces de contact 16 et 17 et qu'il est alors nécessaire de retenir contre le mouvement alternatif des paires de mâchoires 1 et 2 en la maintenant entre des rebords 21 et 22 des deux mâchoires 5 et 6 d'une même paire. Les rebords 21 et 22 comprennent aussi des surfaces d'appui pour poser correctement la plaquette 20. Ces surfaces ne s'étendent pas jusqu'à la manchette 10, pour éviter le contact des parties fondues de la plaquette 20. Afin d'interdire le moindre mouvement -principalement en direction longitudinale- de la plaquette par rapport aux rebords 21 et 22, il peut être prévu un serrage sur une pente comme représenté à la figure 5A : un coin 18 est intercalé entre la plaquette 20 et le rebord 21, dont les faces en regard sont biseautées pour s'appuyer sur les faces obliques du coin 18. Le serrage est assuré par une vis 38 engagée dans une console 39 au-dessus du rebord 21 et liée à lui : la vis 38 pèse sur le coin 18, l'abaisse sur la mâchoire 5, ce qui retient la plaquette 20 contre un mouvement inverse. Un dispositif semblable existe pour l'autre mâchoire 6 et l'autre rebord 22. La réalisation du soudage est identique à celle de la figure 1. On voit bien à la figure 3 que la plaquette 20 s'étend, en largeur, au-delà des bords d'attaque 23 et de fuite 24.

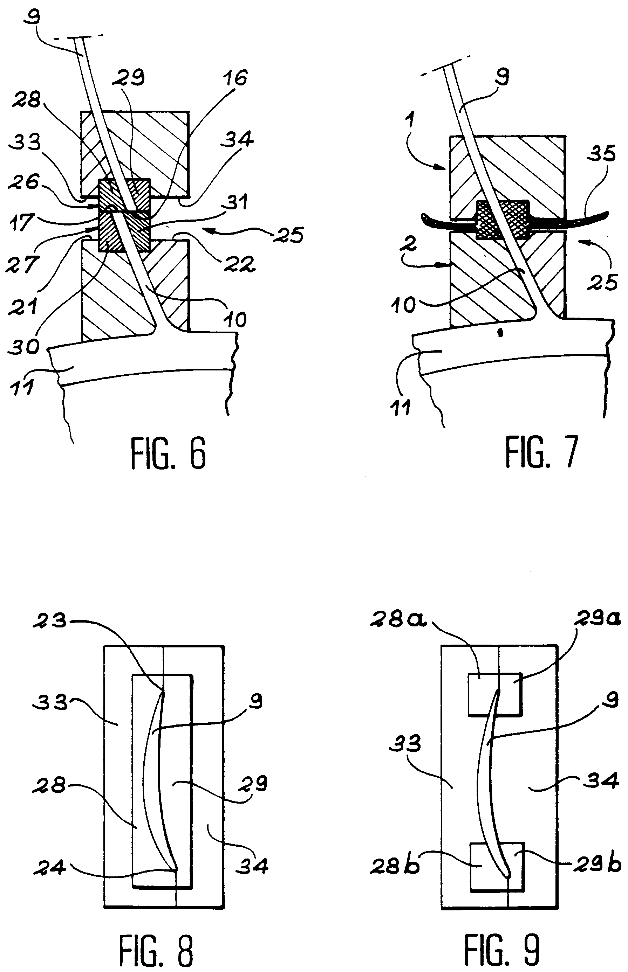

Une autre famille de réalisations est décrite à l'aide des figures 6 et 7 qui représentent la situation au début et à la fin du soudage. Cette fois, on utilise une collerette 25 formée de deux parties 26 et 27 associées respectivement à l'extrémité 9 et à la manchette 10 de l'aube. Plus précisément, les parties 26 et 27 de la collerette 25 sont disposées autour des portions de ces pièces qui sont adjacentes aux surfaces de contact 16 et 17, et elles se composent chacune de morceaux, respectivement 28, 29 et 30, 31, touchant une face respective -intrados ou extrados- de l'aube et se touchant mutuellement au-delà des bords d'attaque et de fuite comme on le voit sur les figures 6, 7 et 8. De plus, les parties de collerette 26 et 27 affleurant aux surfaces de contact 16 et 17 sont retenues dans des rebords 21, 22 et 33, 34 des mâchoires 5, 6, 3 et 4 et sont posées au fond des empreintes délimitées par ces rebords. La collerette 25 est donc complètement retenue et devient plastique pendant le soudage de sorte que la matière écrasée reflue et forme une bavure 35 sortant d'entre les paires de mâchoires 1 et 2 à la fin du soudage, quand on a arrêté les mâchoires et supprimé la pression de forgeage pour obtenir une aube de la longueur voulue. Les morceaux de la collerette 25 sont alors soudés entre eux et à l'aube, alors qu'ils étaient accolés à l'extrémité 9 et à la manchette 10 avant le soudage sans être fixés à ces pièces, mais une liaison complète des six éléments s'est produite pendant le soudage et la conduction thermique a alors pleinement été assurée. Les morceaux 28 à 31 peuvent consister en des portions de tôle usinées aux profils locaux des aubes. Une simple opération d'usinage suffit à retirer la bavure 35 et le reliquat de la collerette 25 comme dans les autres réalisations. Sur la figure 8, les morceaux de collerette 28, 29 s'étendent du bord d'attaque 23 au bord de fuite 24 et au-delà de ces bords, où ils s'accolent, mais, comme on l'a représenté à la figure 9, on pourrait ne les disposer qu'au voisinage de ces bords où la conduction thermique doit plus précisément être assurée, et ils seraient divisés en deux fragments 28a et 28b, 29a et 29b disjoints. Les rebords 21, 22, 33 et 34 auraient alors une forme appropriée afin d'éviter tout mouvement pendant le soudage, comme déjà représenté à la figure 5A par exemple.

Il en serait de même si les fragments 28a et 29a ne constituaient que deux parties jointes d'un seul élément 36 de collerette disposé autour du bord d'attaque 23, ainsi que les fragments 28b et 29b pour un autre élément 37 de collerette autour du bord de fuite 24, comme représenté à la figure 10.

## Revendications

1. Procédé de soudage de deux parties d'aube (9, 10), dans lequel les parties d'aube sont enserrées entre des paires de mâchoires (1, 2) et mises en contact sur des surfaces de contact (16, 17) par un mouvement de rapprochement des paires de mâchoires, caractérisé en ce qu'une collerette (15, 20, 25) est disposée aux surfaces de contact des parties d'aube au moins aux bords d'attaque et de fuite (23, 24) desdites surfaces (16, 17), la collerette s'étendant autour des surfaces de contact.

2. Procédé de soudage suivant la revendication 1, caractérisé en ce que la collerette est une plaquette (15, 20) logée entre les surfaces de contact (16, 17).

3. Procédé de soudage suivant la revendication 2, caractérisé en ce que la plaquette (15) est unie à une des surfaces de contact (16).

4. Procédé de soudage suivant la revendication 2, caractérisé en ce que la plaquette (20) est posée sur une des surfaces de contact (17) et retenue par les bords par un rebord (21, 22) de la paire de mâchoires (2) associée à la partie d'aube (10) comprenant ladite surface de contact (17).

5. Procédé de soudage suivant la revendication 1, caractérisé en ce que la collerette (25) est divisée en deux parties (26, 27) respectivement disposées autour des surfaces de contact (16, 17), affleurant auxdites surfaces et retenues par les bords par des rebords (21, 22, 33, 34) respectifs des paires de mâchoires.

6. Procédé de soudage suivant la revendication 5, caractérisé en ce que les parties de collerettes sont divisées en morceaux (27, 28) accolés chacun à une face des parties d'aube entre les bords d'attaque et de fuite (23, 24) et accolés entre eux au-delà des bords d'attaque et de fuite.

7. Procédé de soudage suivant l'une quelconque des revendications 5 et 6, caractérisé en ce que les parties de collerette sont continues entre le bord d'attaque et le bord de fuite.

8. Procédé de soudage suivant l'une quelconque des revendications 5 et 6, caractérisé en ce que les parties de collerette sont divisées en deux fragments (28a et 29a, 28b et 29b) disjoints dont l'un est situé au bord de fuite et l'autre au bord d'attaque.

9. Procédé de soudage suivant l'une quelconque des revendications 5 et 6, caractérisé en ce que les parties sont divisées en deux morceaux (36, 37) dont l'un entoure le bord d'attaque (23) et l'autre entoure le bord de fuite (24).

10. Procédé de soudage suivant l'une quelconque des revendications 1 à 9, caractérisé en ce que la collerette est retenue par au moins une des paires de mâchoires (1, 2) enserrant les parties d'aubes.

11. Procédé de soudage suivant l'une quelconque des revendications 1 à 10, caractérisé en ce que le soudage est un soudage linéaire par friction.

12. Procédé de soudage suivant l'une quelconque des revendications 1 à 10, caractérisé en ce que le soudage est un soudage par étincelage.

13. Procédé de soudage suivant l'une quelconque des revendications 1 à 10, caractérisé en ce que le soudage est un soudage par forgeage et fusion.

## Claims

1. Method for welding together two blade parts (9, 10), in which method the blade parts are clamped between pairs of jaws (1, 2) and brought into contact on contact surfaces (16, 17) by a movement of bringing the pairs of jaws closer together, characterized in that a collar (15, 20, 25) is arranged at the contact surfaces of the blade parts at least at the leading and trailing edges (23, 24) of the said surfaces (16, 17), the collar stretching around the contact surfaces.

2. Welding method according to Claim 1, characterized in that the collar is a thin plate (15, 20) housed between the contact surfaces (16, 17).

3. Welding method according to Claim 2, characterized in that the thin plate (15) is connected to one of the contact surfaces (16).

4. Welding method according to Claim 2, characterized in that the thin plate (20) is placed on one of the contact surfaces (17) and held by the edges by an upstand (21, 22) of that pair of jaws (2) which is associated with the blade part (10) comprising the said contact surface (17).

5. Welding method according to Claim 1, characterized in that the collar (25) is split into two parts (26, 27) respectively arranged around the contact surfaces (16, 17), lying flush with the said surfaces and held by the edges by respective upstands (21, 22, 33, 34) of the pairs of jaws.

6. Welding method according to Claim 5, characterized in that the collar parts are split into portions (27, 28) each joined to one face of the blade parts between the leading and trailing edges (23, 24) and joined together beyond the leading and trailing edges.

7. Welding method according to either of Claims 5 and 6, characterized in that the collar parts are continuous between the leading edge and the trailing edge.

8. Welding method according to either of Claims 5 and 6, characterized in that the collar parts are split into two disjointed fragments (28a and 29a, 28b and 29b) one of which is situated at the trailing edge and the other at the leading edge.

9. Welding method according to either of Claims 5 and 6, characterized in that the parts are split into two portions (36, 37), one of which surrounds the leading edge (23) and the other of which surrounds the trailing edge (24).

10. Welding method according to any one of Claims 1 to 9, characterized in that the collar is held by at least one of the pairs of jaws (1, 2) clamping the blade parts.

11. Welding method according to any one of Claims 1 to 10, characterized in that the welding is linear friction welding.

12. Welding method according to any one of Claims 1 to 10, characterized in that the welding is flash welding.

13. Welding method according to any one of Claims 1 to 10, characterized in that the welding is forge and fusion welding.

## Patentansprüche

1. Verfahren zum Schweißen zweier Schaufelteile (9, 10), bei dem die Schaufelteile zwischen Backenpaaren (1, 2) eingespannt und durch eine Annäherungsbewegung der Backenpaare an Kontaktflächen (16, 17) in Kontakt gebracht werden,
**dadurch gekennzeichnet,**
daß auf den Kontaktflächen der Schaufelteile zumindest an den Vorder- und Hinterkanten (23, 24) der genannten Flächen (16, 17) ein Kragen (15, 20, 25) angeordnet wird, der sich um die Kontaktflächen erstreckt.

2. Schweißverfahren nach Anspruch 1,
**dadurch gekennzeichnet,**
daß der Kragen ein zwischen den Kontaktflächen (16, 17) liegendes Plättchen (15, 20) ist.

3. Schweißverfahren nach Anspruch 2,
**dadurch gekennzeichnet,**
daß das Plättchen (15) mit einer der Kontaktflächen (16) vereinigt ist.

4. Schweißverfahren nach Anspruch 2,
**dadurch gekennzeichnet,**
daß das Plättchen (20) auf eine der Kontaktflächen (17) gelegt und mit den Rändern von einer Randleiste (21, 22) des Backenpaares (2) gehalten wird, das dem die genannte Kontaktfläche (17) aufweisenden Schaufelteil (10) zugeordnet ist.

5. Schweißverfahren nach Anspruch 1,
**dadurch gekennzeichnet,**
daß der Kragen (25) in zwei Teil (26, 27) geteilt ist, die um die jeweiligen Kontaktflächen (16, 17) angeordnet sind, diese Flächen ausgleichen und an den Rändern von Randleisten (21, 22, 33, 34) der jeweiligen Backenpaare gehalten werden.

6. Schweißverfahren nach Anspruch 5,
**dadurch gekennzeichnet,**
daß die Kragenteile in Stücke (27, 28) geteilt sind, die jeweils zwischen den Vorder- und Hinterkanten (23, 24) an einer Seite der Schaufelteile angefügt und jenseits der Vorder- und Hinterkanten aneinandergefügt sind.

7. Schweißverfahren nach einem der Ansprüche 5 und 6,
**dadurch gekennzeichnet,**
daß die Kragenteile zwischen der Vorderkante und der Hinterkante durchlaufend sind.

8. Schweißverfahren nach einem der Ansprüche 5 und 6,
**dadurch gekennzeichnet,**
daß die Kragenteile in zwei getrennte Fragmente (28a und 29a, 28b und 29b) geteilt sind, von denen sich das eine an der Hinterkante und das andere an der Vorderkante befindet.

9. Schweißverfahren nach einem der Ansprüche 5 und 6,
**dadurch gekennzeichnet,**
daß die Teile in zwei Stücke (36, 37) geteilt sind, von denen das eine die Vorderkante (23) und das andere die Hinterkante (24) umschließt.

10. Schweißverfahren nach einem der Ansprüche 1 bis 9,
**dadurch gekennzeichnet,**
daß der Kragen von wenigstens einem der Backenpaare (1, 2) gehalten wird, mit denen die Schaufelteile eingespannt sind.

11. Schweißverfahren nach einem der Ansprüche 1 bis 10,
**dadurch gekennzeichnet,**
daß das Schweißen ein lineares Reibungsschweißen ist.

12. Schweißverfahren nach einem der Ansprüche 1 bis 10,
**dadurch gekennzeichnet,**
daß das Schweißen ein Abbrennstumpfschweißen ist.

13. Schweißverfahren nach einem der Ansprüche 1 bis 10,
**dadurch gekennzeichnet,**
daß das Schweißen ein Schmiede- und Schmelzschweißen ist.
